# EUROPEAN PATENT APPLICATION

(11) **EP 4 086 074 A1**
(43) Date of publication of application: **09.11.2022**
(21) Application number: 21425019.3
(22) Date of filing: 04.05.2021
(51) Int. Cl.: B32B 17/10

(54) **WINDOW PANE AND METHOD FOR ITS PRODUCTION**

(71) Applicant: Isoclima S.p.A., 35042 Este (Padova) (IT); Maes, Lode, 7711 Dottignies (BE)
(72) Inventor: Santi, Daniele, 30039 Stra (Venezia) (IT); Maes, Lode, 7711 Dottignies (BE)
(74) Representative: Seitz, Ralf Hans Frank

(57) **Abstract**

The present invention refers to a window pane (1), particularly for a motor vehicle, and to a corresponding production method. The window pane (1) comprises at least a first pane (2) and a second pane arranged parallel to the first pane (2), wherein the first and second panes have the same or almost the same perimeter or shape. An intermediate adhesive layer (4) or foil is arranged in a space between the first and second panes) for forming a laminate therewith, wherein the intermediate adhesive layer (4) has a smaller shape or smaller perimeter than the first and second panes. The intermediate adhesive layer (4) occupies a part of the space between the panes. At least one layer of reinforcing adhesive material is injected into the other or remaining part of the space between the first and second panes and adheres to opposing inner sides of the first and second panes. The layer of reinforcing adhesive material has a higher stiffness than the intermediate adhesive layer or foil wherein the layer of reinforcing adhesive material is co-planar to the intermediate adhesive layer (4) and the layer of reinforcing adhesive material is flush to at least one side or opposing sides of the outer edge of the window pane.

## Description

The present invention refers to a window pane and to a method for the production of the window pane.

Glass panes or windows, in general, can be subjected to high forces generated by suction power, for example in a driving car, or by wind power in general. When the glass or window is exposed to external wind or suction power it can be twisted. In case of movable glass, for instance, a moveable side window of a car, this twist or distortion can block the movement of the glass.

This distortion phenomenon is explicit for laminated glass like laminated safety glass (VSG = Verbundsicherheitsglas). Laminated glass is a glass that consists of minimum three layers, one outer glass, one inner glass and in between minimum one layer of an adhesive like, for instance, a Polyvinylbutyral (PVB) foil. The reason for this distortion results mainly from the flexibility of the adhesive foil or layer. Once the part is laminated the adhesive is getting more soft or weak. Because of the weakness of the adhesive or PVB- foil the outer glass and inner glass can separately move from each other. This flexibility effect will increase when more adhesive layers will be combined or the thickness of the adhesive layers increase. An inner glass and an outer glass within between combined layers of an acoustic performance PVB together with a solar control PVB would be an example for such a combined laminate.

It is, therefore, an object of the invention to reduce the distortion in a window pane or laminated glass.

This object is solved by the laminated glass or window pane of the invention of claim 1. Accordingly, the invention refers to a window pane, particularly for a motor vehicle. The window pane comprises at least a first pane and a second pane arranged parallel to the first pane, wherein the first and second panes have the same or almost the same perimeter or shape. Further, the window pane of the invention comprises an intermediate adhesive layer or foil arranged in a space between the first and second panes for forming a laminate therewith, wherein the intermediate adhesive layer has a smaller shape or smaller perimeter than the first and second panes. Accordingly, the intermediate adhesive layer occupies only a part of the space between the panes. The other part of the space, which is not occupied by the intermediate adhesive layer, is a remaining or open space between the panes. The open space is defined by an outer edge of the window pane, opposing inner sides of the first and second panes and a face side of the intermediate adhesive layer which extends between the glass panes, wherein the open space is open at the outer edge or perimeter of the window pane. Further, a reinforcing adhesive material is provided in the open space between the first and second panes which has a higher strength, hardness and/or stiffness than the intermediate adhesive layer wherein the reinforcing adhesive material adheres to opposing inner sides of the first and second panes and it is co-planar to the intermediate adhesive layer. The reinforcing, stiffer layer of stiffer reinforcing adhesive material is flush to at least one side or two opposing sides of the outer edge of the window pane.

Due to the higher strength or hardness of the reinforcing adhesive or sticky material in the open space between the first and second panes, the flexibility of the adhesive layer between the panes or glass panes is advantageously reduced by the invention which results in an increase of the stiffness of the laminated pane or the laminated glass and reduces distortions and shearing affecting the laminated pane or laminated glass window.

A laminated preform of the window pane of the invention comprising the first and second panes and the intermediate adhesive interlayer provides the open space between the first and second panes which is open at the outer edge or perimeter of the window pane. This ensures a complete evacuation or venting of air within the open space during filling or injecting of liquid reinforcing adhesive material into the open space from outside of the preform or window pane.

The panes of the window pane could be, for instance, panes made of glass or polycarbonate (PC). An outer or first pane could be made of tempered glass and an inner or second pane could be made of PC. The intermediate adhesive layer could be an adhesive foil of, for instance, PVB, polyurethane (PU), an ionomer, or EVA. The intermediate adhesive layer can comprise at least two adhesive or functional layers or foils in a laminate.

The layer of reinforcing adhesive material can be continuously flush to two adjoining sides forming a corner of the outer edge of the window pane to improve the stiffness and durability of the laminated window pane.

The reinforcing adhesive material 8 may be glue, a resin, an epoxy, or a PVB that is stiffer and firmer than the PVB-foil of the intermediate adhesive layer. The reinforcing adhesive material could preferably have a shore hardness D > 60 in order to ensure a greater stiffness of the window pane avoiding distortion of the laminated panes. The tensile strength may be smaller than < 30 MPa. An elongation at breaks may be smaller than < 70%. Depending on this values and the area of applied reinforcing adhesive material, it is possible to increase the stiffness of laminated glass by 120 % to more than 200 %.

The present invention also refers to a method according to claim 5. Accordingly, the method of the invention for producing a laminated window pane, particularly a laminated safety glass (VSG) for a vehicle, particularly according to one of the claims 1 to 4, comprises the following steps: a first pane and a second pane having the same or almost the same perimeter or shape for parallel arranging thereof and an intermediate adhesive layer or foil between the first and second panes for forming a laminate therewith are provided, wherein the intermediate adhesive layer has a smaller shape or perimeter than the first and second panes.

According to the invention, the intermediate adhesive layer is then arranged between the first and second panes in order to laminate a preform of the window pane, wherein the intermediate adhesive layer occupies a part of a space between the panes and wherein the remaining or open space is provided between the panes, the intermediate adhesive layer, and an outer edge of the window pane, wherein the open space is open to outside at the outer edge of the preform.

Afterwards, the remaining space between the panes is filled with a liquid reinforcing adhesive material supplied or injected therein from outside of the preform, wherein the reinforcing adhesive material is provided co-planar to the intermediate adhesive layer, adjoins the intermediate adhesive layer, and extends and is flush to the outer edge of the window pane.

Then, the window pane is provided by curing of the liquid reinforcing adhesive material in the remaining space for providing the cured, solid reinforcing adhesive material that has a higher strength, stiffness or hardness than the intermediate adhesive layer and that extends to the outer edge of the window pane.

According to the invention, once the sticky liquid reinforcing material in the open space between the glass panes has been cured out it will stick the inner and outer panes strongly together which results in a stiffer laminated glass.

A laminated preform of the window pane of the invention comprising the first and second panes and the intermediate adhesive interlayer provides the open space between the first and second panes which is open at the outer edge or perimeter of the window pane. This ensures a complete evacuation or venting of air within the open space or degassing during filling or injecting of liquid reinforcing adhesive material into the open space from outside of the perform or window pane.

The liquid reinforcing adhesive material can be injected at opposing sides of the outer edge of the preform from outside of the preform and air within the remaining space is vented on the side or bottom side of the outer edge between opposing sides of the outer edge. This preferred step of the invention ensures a quick filling up of the open space since injecting on opposing sides at the same time is performed. Further, this step ensures a complete evacuation of air out of the remaining open space during injecting the liquid reinforcing adhesive material.

The liquid reinforcing adhesive material can be injected at one of the opposing sides of the outer edge of the preform from outside of the preform, wherein air within the remaining space is vented at the other opposing side and at the bottom side between the opposing sides of the outer edge of the preform. This preferred embodiment of the invention ensures a complete evacuation of air out of the remaining open space during injecting the liquid reinforcing adhesive material.

The liquid reinforcing adhesive material could be injected at one of two sides of the outer edge of the preform from outside of the preform, wherein air within the remaining space is vented at the other side of the two adjoining sides forming a corner of the outer edge of the preform. This preferred method of the invention also ensures a complete evacuation of air.

Preferably, a covering or sealing tool arranged on the outer edge of the preform is used to cover or seal at least a part of the outer edge of the preform, wherein the liquid reinforcing adhesive material is injected via or through the covering tool into the remaining space of the preform. The covering tool helps to supply the liquid reinforcing material to the remaining or open space in a controlled manner.

Preferably, at least one covering tool arranged on the outer edge of the preform for covering the outer edge opening of the preform is used and that the remaining space of the preform is vented via or through the covering tool to outside of the preform during injection of the liquid reinforcing adhesive material.

The covering tool can be removed after filling up the remaining space between the panes of the preform with the liquid reinforcing adhesive material in order to ensure curing and degassing of the reinforcing adhesive material. The covering tool can be removed before or after curing of the liquid reinforcing adhesive material supplied to the remaining space.

A covering tool or several covering tools can be used for framing at least a part of the outer edge or the whole outer edge of the preform.

The covering tool is preferably a soft tool to avoid any scratching or damage of the panes, particularly of the glass panes, of the window pane. Further, the soft tool ensures the sealing of the outer edge during injection of the liquid adhesive material.

Further advantageous embodiments of the invention are mentioned in the dependent claims. Advantageous embodiments and advantages of the invention could also be derived from the following description of exemplified and preferred embodiments in connection with the drawings:
- Fig. 1: a schematic side view of a window pane according to an exemplified and preferred embodiment of the invention;
- Fig. 2: a section side view of the embodiment of the invention according to Fig. 1, seen in the direction of arrow II in Fig. 1;
- Fig. 3: a schematic side view of a preform of the window pane of Fig. 1 and 2; and
- Fig. 4: a section view of the preform of Fig. 3 in the direction of arrow IV in Fig. 3; and
- Fig. 5: a schematic section view of a preform of the window pane of Fig. 1 and 2 showing a covering tool with injection passage, the covering tool is provided on the outer edge of the preform of the window pane for explaining a further embodiment of the method of the invention;
- Fig. 6: a schematic section view of the preform of the window pane of Fig. 1 and 2 showing the covering tool with venting passage;
- Fig. 7: a schematic side view of the preform of the window pane of Fig. 1 and 2 showing the complete covering tool provided on a part of the outer edge or perimeter of the preform;
- Fig. 8: a schematic side view of a further preform of the window pane of the invention showing a further covering tool provided on three sides of the outer edge or perimeter of this preform;
- Fig. 9: a schematic side view of a yet further preform of the window pane of the invention showing a further covering tool provided on all four sides of the outer edge or perimeter of this preform; and
- Fig. 10: a schematic side view of a preform of the window pane of the invention showing a further covering tool provided substantially on two opposing sides of the outer edge or perimeter of this preform.

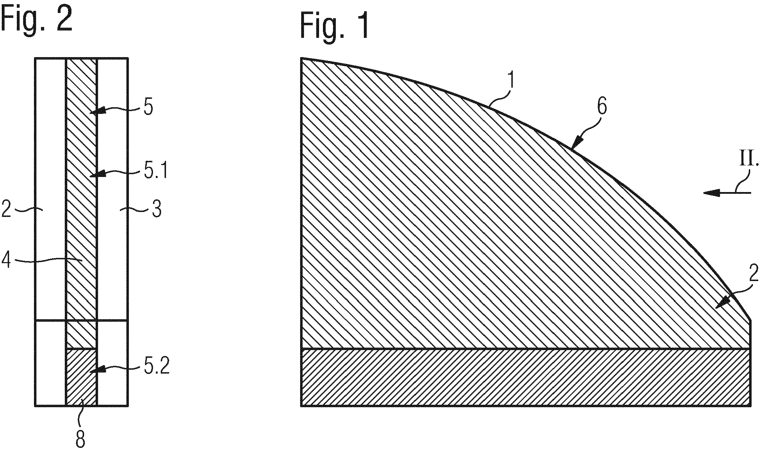

Fig. 1 and Fig. 2 show a window pane 1 according to a preferred embodiment of the invention. The window pane 1 may consist of a laminated safety glass (VSG = Verbundsicherheitsglas) and it could be used, for instance, as a moveable side glass of, for instance, a car or other vehicle.

The window pane 1 has a transparent first, outer glass pane 2, directed to an outside of the car, a transparent second, inner glass pane 3, directed to an inside of the car, and at least one transparent intermediate adhesive layer 4 that may be a PVB (Polyvinylbutyral) foil. The outer and inner glass panes 2 and 3 have the same or almost the same perimeter or shape and they are arranged in parallel to each other.

The intermediate adhesive layer 4 is arranged between the outer and inner glass panes 2 and 3 for forming a laminate therewith. The intermediate adhesive layer 4 has a smaller perimeter or shape than the glass panes 2 and 3. Accordingly, the intermediate adhesive layer 4 occupies a part 5.1 of the space 5 between the glass panes 2 and 3.

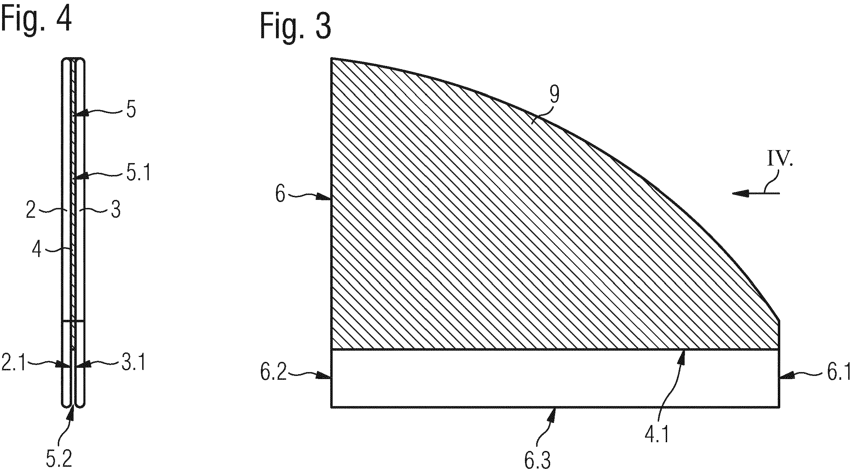

Fig. 3 and Fig. 4 show and explain a preform 9 of the window pane 1 of the invention of Figs. 1 and 2. A remaining part 5.2 of the space 5 or an open space between the glass panes 2 and 3 is defined by the outer edge 6 of the window pane 1, the inner sides 2.1 and 3.1 of the outer and inner glass panes 2 and 3 and a face side 4.1 of the intermediate adhesive layer 4 extending between the glass panes 2 and 3. The remaining space 5.2 is continuously open to outside of the preform 9 at the outer edge 6 or perimeter of the preform 9.

A reinforcing adhesive material 8, injected into the other or remaining open part 5.2 of the space 5 between the first and second panes 2 and 3, which is not occupied by the intermediate adhesive layer 4. The reinforcing adhesive material 8 is co-planar to the intermediate adhesive layer 4 and is flush continuously to a part of a left side 6.2, a right side 6.1 opposed to the left side 6.2, and a bottom side 6.3 adjoining the left side 6.2 and the right side 6.1 of the outer edge 6 of the window pane 1 of the invention.

The reinforcing adhesive material 8 comprises a higher strength, hardness and/or stiffness than the PVB-foil of the intermediate adhesive layer 4 when the reinforcing adhesive material 8 or layer is cured and solid. The reinforcing adhesive material 8 has the same thickness as the intermediate adhesive layer 4. The reinforcing adhesive material 8 may be provided outside of a viewable area of the window pane 1. The reinforcing adhesive material 8 may be glue, a resin, an epoxy, a PVB that is stiffer and firmer than the PVB-foil of the intermediate adhesive layer 4. The Shore hardness D of the solid reinforcing adhesive material 8 can be D > 5O or more preferably D may be greater than > 60. The solid reinforcing adhesive material 8 or layer effects a stiffer and more rigid connection between the inner sides 2.1 and 3.1 of the outer and inner glass panes 2 and 3 and the face side 4.1 of the intermediate adhesive layer 4 extending between the glass panes 2 and 3 than the intermediate adhesive layer 4 does.

A method for providing the window pane 1, particularly the laminated safety glass (VSG) for a vehicle like a car, comprises the step of providing the outer glass pane 2 and the inner glass pane 3.

In a further step, the adhesive PVB (Polyvinylbutyral)-foil as the intermediate adhesive layer 4 is provided and arranged between the outer and inner glass panes 2 and 3 wherein the intermediate adhesive layer 4 occupies a part 5.1 of the space 5 between the glass panes 2 and 3. The intermediate adhesive layer has a smaller perimeter and shape than the glass panes 2 and 3.

Next, the inner and outer glass panes 2 and 3 and the intermediate adhesive layer 4 or PVB-foil are laminated together providing the preform 9 of the window pane 1 with remaining space 5.2 between the glass panes 2 and 3. The lamination can be carried out in an autoclave.

In the next step, liquid reinforcing adhesive material 8 like glue, epoxy, resin, or PVB adhesive is supplied or injected at the outer edge 6 of the window pane into the remaining space 5.2 between the glass panes 2 and 3 until the whole remaining open space 5.2 between the inner sides 2.1 and 3.1 of the glass panes 2 and 3, the face side 4.1 of the intermediate adhesive layer 4, and the outer edge 6 or perimeter of the preform 9 is filled up completely with the liquid reinforcing adhesive material 8 until it is continuously flush with the part of the left side 6.2, the whole right side 6.2, and the bottom side 6.3 of the outer edge 6.

Air or gaseous material in the remaining space 5.2 is vented or pushed out through the open outer edge 6 of the window pane 1 to outside of the preform 9 during supplying or injecting the liquid reinforcing adhesive material 8. The liquid reinforcing adhesive material 8, for instance, is injected concurrently into the remaining open space 5.2 at the opposing sides 6.1 and 6.2 of the outer edge 6 of the preform 9 from outside of the preform 9. The air within the remaining open space 5.2 is vented or pushed out at the bottom side 6.3 of the outer edge 6 concurrently during injecting the liquid reinforcing adhesive material 8.

Afterwards, the liquid reinforcing adhesive material 8 in the remaining space 5.2 is cured to provide the window pane 1 with the cured, solid reinforcing adhesive material 8 in between the glass panes 2 and 3.

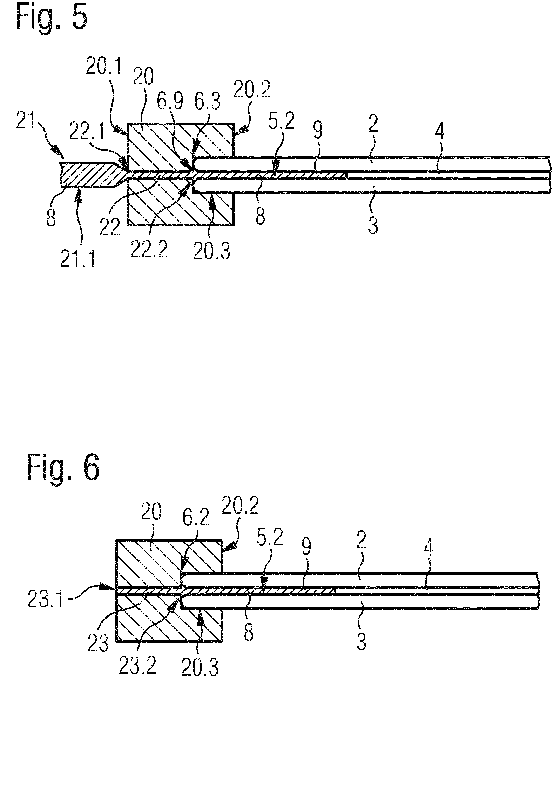

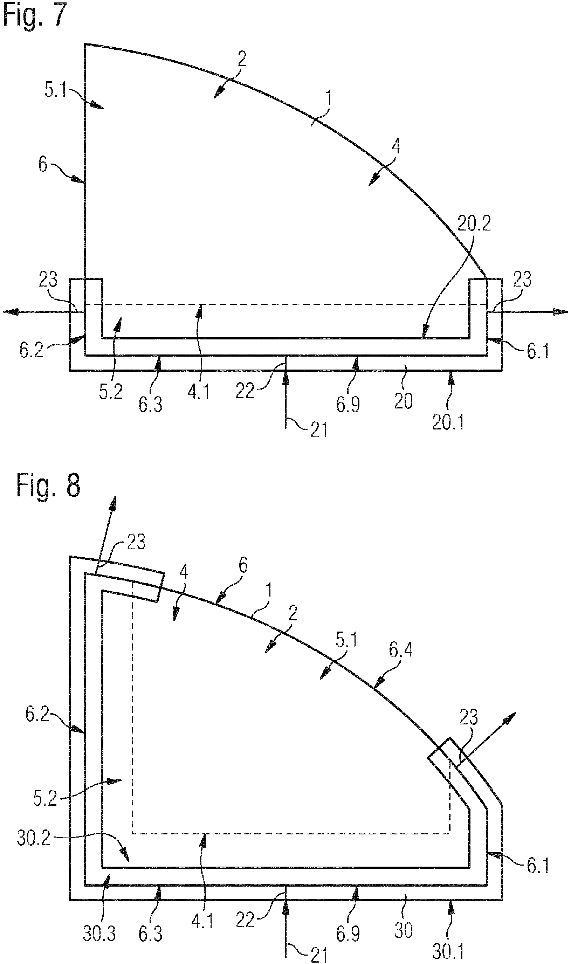

Fig. 5, Fig. 6, and Fig. 7 are used to explain a further preferred embodiment of the method of the invention using a covering tool 2O that can be a soft tool, e.g. a sealing profile made of TPE (thermoplastic elastomer or rubber) or an adhesive plastic tape, surrounding and covering the part of left side 6.2, the part of the right side 6.1, and the bottom side 6.3 of the outer edge 6 of the preform 9. Accordingly, the covering tool 20 extends along the whole bottom side 6.3 of the outer edge 6 and the part of left side 6.2 and the part of right side 6.1 adjoining to the bottom side 6.3 and forming corresponding corners therewith. The covering tool 20 covers an outer edge opening 6.9 provided continuously along the bottom side 6.3 and the parts of the left and right sides 6.1 and 6.2 as shown in Fig. 7. Ends of the covering tool 20 may overlap the intermediate adhesive layer 4 at the parts of the left and right sides 6.1 and 6.2 of the outer edge 6.

As shown in Fig. 6, the covering tool 20 comprises at least one injection passage 22 or bore fluidly connected to an injection outside opening 22.1 on an outside 20.1 of the covering tool 20 to an injection inside opening 22.2 provided on an inside 20.2 of the covering tool 20. The injection inside opening 22.2 is fluidly connected via the outer edge opening 6.9 of the outer edge 6 to the remaining space 5.2 between the glass panes 2 and 3 of the preform 9. As shown in Fig. 5, the covering tool 20 comprises a recess 20.3 on its inside 20.2 for accommodating and sealing the adjoining sides and parts 6.1, 6.2, and 6.3 of the outer edge 6 of the preform 9 wherein the whole outer edge opening 6.9 is continuously covered and sealed by the bottom of the recess 20.3 of the covering tool 20.

Further, the covering tool 20 comprises a first venting passage 23 or bore fluidly connecting an venting outside opening 23.1 on the outside 20.1 of the covering tool 20 to an venting inside opening 23.2 provided on the inside 20.2 of the covering tool 20. The venting inside opening 23.2 in the recess 20.3 is fluidly connected via the outer edge opening 6.9 of the outer edge 6 to the remaining or open space 5.2 between the glass panes 2 and 3 of the preform 9. The first venting passage 23 is provided at the part of the left side 6.2 of the outer edge 6 of the preform 9. The covering tool 20 comprises a second venting passage 23 that is provided at the right side 6.2 of the outer edge 6 of the preform 9.

The method of the invention using the covering tool 20 for providing the window pane 1, particularly the laminated safety glass (VSG), for instance, a side light of a vehicle like a car, comprises again the step of providing the outer glass pane 2 and the inner glass pane 3.

The adhesive PVB(Polyvinylbutyral)-foil used as intermediate adhesive layer 4 is provided by cutting and it is arranged between the outer and inner glass panes 2 and 3. The intermediate adhesive layer 4 occupies a part 5.1 of the space 5 between the glass panes 2 and 3. The intermediate adhesive layer has a smaller perimeter and shape than the glass panes 2 and 3.

Next, the inner and outer glass panes 2 and 3 and the intermediate adhesive layer 4 or PVB-foil are laminated together providing the preform 9 of the window pane 1 with remaining space 5.2 between the glass panes 2 and 3. The lamination can be carried out in an autoclave.

In the next step, the covering tool 20 is attached to the preform 9 such that it surrounds and covers the bottom side 6.3 and the parts of the left and right sides 6.1 and 6.2 of the outer edge 6 of the preform 9 wherein the sides 6.2 and 6.1 represent opposing sides of the outer edge 6 of the preform 9. The parts of sides 6.1, 6.2, and side 6.3 of the outer edge 6 are then accommodated in a recess 20.3 of the covering tool 20 and they touch a bottom of the recess 20.3.

According to Fig. 5, the liquid reinforcing adhesive material 8, e.g. glue or sticky PVB adhesive, resin or epoxy, that is stiffer and firmer than the PVB-foil of the intermediate adhesive layer 4 if cured, is then injected by an injection nozzle 21 of a corresponding injection device 21.1 via the injection outside opening 22.1, the injection passage 22 of the covering tool 20, the injection inside opening 22.2, and the outer edge opening 6.9 of the outer edge 6 of the preform 9 into the remaining or open space 5.2 of the preform 9. The supply or injection of the liquid reinforcing adhesive material 8 is continued until the whole remaining open space 5.2 between the inner sides 2.1 and 3.1 of the glass panes 2 and 3, the face side 4.1 of the intermediate adhesive layer 4, and the outer edge 6 or perimeter of the preform 9 is filled up completely with the liquid reinforcing adhesive material 8 and the sticky liquid reinforcing adhesive material 8 is continuously flush with the outer edge opening 6.9 on the sides 6.1, 6.2, and 6.3 of the outer edge 6 of the preform 9.

During injection of the liquid reinforcing adhesive material 8, air in the remaining space 5.2 is vented or pushed out from inside of the open, remaining space 5.2 of the preform 9 via the outer edge opening 6.9 of the preform, the corresponding venting inside openings 23.2, the first and second venting passages 23, and the corresponding venting outside openings 23.1 on the outside 20.1 of the covering tool 20 to the outside environment.

Afterwards, the liquid reinforcing adhesive material 8, for instance, the glue, epoxy, resin, or stiffer PVB or other sticky material, in the remaining space 5.2 is cured to provide the window pane 1 with the additional solid reinforcing adhesive material 8 of high hardness and stiffness in between the glass panes 2 and 3.

Finally, the covering tool 20 is completely removed and the outer edge 6 of the window pane 1 is grinded and cleaned to remove adhering residues of the covering tool 20 or the reinforcing adhesive material from the surface of the window pane 1.

Fig. 8 explains a further covering tool 30 that can be used instead of the covering tool 20 of Fig. 7 in the method of the present invention.

According to the schematic view of Fig. 8, the covering tool 30 extends along the whole bottom side 6.3, the whole left side 6.2 and the whole right side 6.1 adjoining the bottom side 6.3 and forming corresponding corners therewith. Further, the covering tool 30 covers a first short part of a top side 6.4 of the outer edge 6 of the preform 9 and a second short part of the top side 6.4 of the outer edge 6 wherein the first part of the top side 6.4 adjoins the left side 6.2 in a corner and the second part of the top side 6.4 adjoins the right side 6.2 in a corner. The covering tool 30 covers and seals an outer edge opening 6.9 provided continuously along the whole sides 6.1, 6.2, and 6.3 and the first and second parts of the top side 6.4 of the outer edge 6 of the preform 9. Free ends of the covering tool 30 may overlap the intermediate adhesive layer 4 at the first and second parts of the top side 6.4.

As shown in Fig. 8, the covering tool 30 comprises at least one injection passage 22 or bore fluidly connected to an injection outside opening 22.1 on an outside 30.1 of the covering tool 30 to an injection inside opening 22.2 provided on an inside 30.2 of the covering tool 30. The injection inside opening 22.2 is fluidly connected via the outer edge opening 6.9 of the outer edge 6 to the remaining space 5.2 between the glass panes 2 and 3 of the preform 9. The covering tool 30 comprises a recess 30.3 on its inside 30.2 for accommodating and sealing the adjoining sides 6.1, 6.2, and 6.3 and the parts of side 6.4 of the outer edge 6 of the preform 9 wherein the whole outer edge opening 6.9 is continuously covered and sealed by the bottom of the recess 30.3 of the covering tool 30.

Further, the covering tool 30 comprises a first venting passage 23 or bore fluidly connecting an venting outside opening 23.1 on the outside 30.1 of the covering tool 3O to an venting inside opening 23.2 provided on the inside 30.2 of the covering tool 30. The venting inside opening 23.2 in the recess 30.3 is fluidly connected via the outer edge opening 6.9 of the outer edge 6 to the remaining or open space 5.2 between the glass panes 2 and 3 of the preform 9. The first venting passage 23 is provided at the first part of the top side 6.4 of the outer edge 6 of the preform 9. The covering tool 30 comprises a second venting passage 23 that is provided at the second part of the top side 6.4 of the outer edge 6.

The method of the invention using the covering tool 30 for providing the window pane 1, particularly the laminated safety glass (VSG), for instance, a side light of a vehicle like a car, comprises again the step of providing the outer glass pane 2 and the inner glass pane 3.

The adhesive PVB (Polyvinylbutyral)-foil used as intermediate adhesive layer 4 is provided by cutting and it is arranged between the outer and inner glass panes 2 and 3. The intermediate adhesive layer 4 occupies a part 5.1 of the space 5 between the glass panes 2 and 3 as shown in Fig. 8. The intermediate adhesive layer has a smaller perimeter and shape than the glass panes 2 and 3.

Next, the inner and outer glass panes 2 and 3 and the intermediate adhesive layer 4 or PVB-foil are laminated together providing the preform 9 of the window pane 1 with remaining space 5.2 between the glass panes 2 and 3. The lamination can be carried out in an autoclave.

In the next step, the covering tool 30 is attached to the preform 9 such that it surrounds and covers the bottom side 6.3, the left and right sides 6.1 and 6.2 and the first and second parts of the top side 6.4 of the outer edge 6 of the preform 9 wherein the sides 6.2 and 6.1 represent opposing sides of the outer edge 6 of the preform 9. The sides 6.1, 6.2, and 6.3 and the parts of the top side 6.4 of the outer edge 6 are then accommodated in the recess 30.3 of the covering tool 30 and they touch a bottom of the recess 30.3.

According to Fig. 5, the liquid reinforcing adhesive material 8, e.g. glue or sticky PVB adhesive, is then injected by an injection nozzle 21 of a corresponding injection device 21.1 via the injection outside opening 22.1, the injection passage 22 of the covering tool 30, the injection inside opening 22.2, and the outer edge opening 6.9 of the outer edge 6 of the preform 9 into the remaining or open space 5.2 of the preform 9. The supply or injection of the liquid reinforcing adhesive material 8 is continued until the whole remaining open space 5.2 between the inner sides 2.1 and 3.1 of the glass panes 2 and 3, the face side 4.1 of the intermediate adhesive layer 4, and the outer edge 6 or perimeter of the preform 9 is filled up completely with the liquid reinforcing adhesive material 8 and the sticky liquid reinforcing adhesive material 8 is continuously flush with the outer edge opening 6.9 on the sides 6.1, 6.2, and 6.3 and the parts of side 6.4 of the outer edge 6 of the preform 9.

During injection of the liquid reinforcing adhesive material 8, air in the remaining space 5.2 is vented or pushed out from inside of the remaining or open space 5.2 of the preform 9 via the outer edge opening 6.9 of the preform, the corresponding venting inside openings 23.2, the first and second venting passages 23, and the corresponding venting outside openings 23.1 on the outside 30.1 of the covering tool 30 to the outside environment.

Afterwards, the liquid reinforcing adhesive material 8, for instance, the sticky glue, epoxy, resin, or stiffer PVB or other sticky material, in the remaining space 5.2 is cured to provide the window pane 1 with the additional solid reinforcing adhesive material 8 of high hardness and stiffness in between the glass panes 2 and 3.

Finally, the covering tool 30 is completely removed and the outer edge 6 of the window pane 1 is grinded and cleaned to remove adhering residues of the covering tool 30 or the reinforcing adhesive material from the surface of the window pane 1 according to Fig. 8.

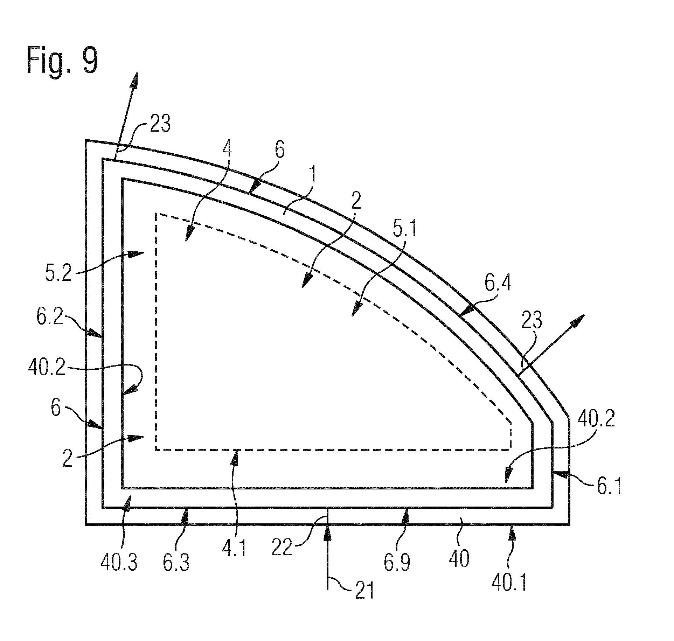

Fig. 9 explains a further covering tool 40 that can be used instead of the covering tools 20 or 30 of Fig. 7 or 8 in the method of the present invention.

According to the schematic view of Fig. 9, the covering tool 40 extends like a frame along the whole bottom side 6.3, the whole left side 6.2, the whole right side 6.1, and the whole top side 6.4 of the outer edge 6 of the preform 9. The covering tool 40 covers and seals an outer edge opening 6.9 provided continuously along the whole sides 6.1, 6.2, 6.3 and 6.4. The remaining open space 5.2 is provided between the glass panes 2 and 3 and between the face 4.1 of the intermediate adhesive foil 4 and the outer edge opening 6.9.

The covering tool 40 of Fig. 9 comprises at least one injection passage 22 or bore fluidly connected to an injection outside opening 22.1 on an outside 40.1 of the covering tool 40 to an injection inside opening 22.2 provided on an inside 40.2 of the covering tool 40. The injection inside opening 22.2 is fluidly connected via the outer edge opening 6.9 of the outer edge 6 to the remaining space 5.2 between the glass panes 2 and 3 of the preform 9. The covering tool 40 comprises a recess 40.3 on its inside 40.2 for accommodating and sealing the adjoining sides 6.1, 6.2, 6.3 and 6.4 of the outer edge 6 wherein the whole outer edge opening 6.9 is continuously covered and sealed by the bottom of the recess 40.3 of the covering tool 40.

Further, the covering tool 40 comprises a first venting passage 23 or bore fluidly connecting an venting outside opening 23.1 on the outside 40.1 of the covering tool 40 to an venting inside opening 23.2 provided on the inside 40.2 of the covering tool 40. The venting inside opening 23.2 in the recess 40.3 is fluidly connected via the outer edge opening 6.9 of the outer edge 6 to the remaining or open space 5.2 between the glass panes 2 and 3 of the preform 9. The first venting passage 23 is provided at top side 6.4 near to the left side 6.2 of the outer edge 6 of the preform 9. The covering tool 40 comprises a second venting passage 23 that is provided at the top side 6.4 near to the right side 6.1 of the outer edge 6.

The method of the invention using the covering tool 40 for providing the window pane 1, particularly the laminated safety glass (VSG), for instance, a side light of a vehicle like a car, comprises again the step of providing the outer glass pane 2 and the inner glass pane 3.

The adhesive PVB(Polyvinylbutyral)-foil used as intermediate adhesive layer 4 is provided by cutting and it is arranged between the outer and inner glass panes 2 and 3. The intermediate adhesive layer 4 occupies a part 5.1 of the space 5 between the glass panes 2 and 3 as shown in Fig. 8. The intermediate adhesive layer 4 has a smaller perimeter and shape than the glass panes 2 and 3.

Next, the inner and outer glass panes 2 and 3 and the intermediate adhesive layer 4 or PVB-foil are laminated together providing the preform 9 of the window pane 1 with remaining space 5.2 framing along the outer edge 6 between the glass panes 2 and 3. The lamination can be carried out in an autoclave.

In the next step, the covering tool 40 is attached to the preform 9 such that it surrounds and covers the bottom side 6.3, the left and right sides 6.1 and 6.2 and the top side 6.4 of the outer edge 6 of the preform 9. The sides 6.1, 6.2, 6.3, and 6.4 of the outer edge 6 are then accommodated in the recess 40.3 of the covering tool 40 and they touch the bottom of the recess 40.3.

According to Fig. 5, the liquid reinforcing adhesive material 8, e.g. glue or sticky PVB adhesive, is then injected by an injection nozzle 21 of a corresponding injection device 21.1 via the injection outside opening 22.1, the injection passage 22 of the covering tool 40, the injection inside opening 22.2, and the outer edge opening 6.9 of the outer edge 6 of the preform 9 into the remaining or open space 5.2 of the preform 9. The supply or injection of the liquid reinforcing adhesive material 8 is continued until the whole remaining open space 5.2 between the inner sides 2.1 and 3.1 of the glass panes 2 and 3, the face side 4.1 of the intermediate adhesive layer 4, and the outer edge 6 or perimeter of the preform 9 is filled up completely with the liquid reinforcing adhesive material 8 and the sticky liquid reinforcing adhesive material 8 is continuously flush with the outer edge opening 6.9 on the Sides 6.1, 6.2, 6.3, and 6.4 of the outer edge 6 of the preform 9.

During injection of the liquid reinforcing adhesive material 8, air in the remaining space 5.2 is vented or pushed out from inside of the remaining or open space 5.2 of the preform 9 via the outer edge opening 6.9 of the preform, the corresponding venting inside openings 23.2, the first and second venting passages 23, and the corresponding venting outside openings 23.1 on the outside 40.1 of the covering tool 40 to the outside environment.

Afterwards, the liquid reinforcing adhesive material 8, for instance, the glue, epoxy, resin, or stiffer PVB or other sticky material, in the remaining space 5.2 is cured to provide the window pane 1 with the additional solid reinforcing adhesive material 8 of high hardness and stiffness in between the glass panes 2 and 3.

Finally, the covering tool 40 is completely removed and the outer edge 6 of the window pane 1 is grinded and cleaned to remove adhering residues of the covering tool 40 or the reinforcing adhesive material from the surface of the window pane 1 according to Fig. 9. This window pane can be used, for instance, in a roof or sunroof.

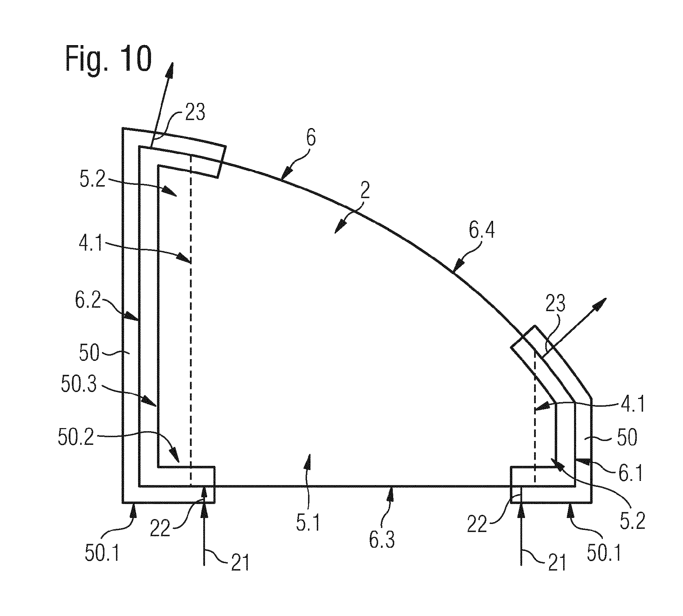

Fig. 10 explains a further covering tool 50 that can be used instead of the covering tools 20, 30 or 40 in the method of the present invention.

According to the schematic view of Fig. 10, the covering tool 50 extends along the whole left side 6.2 and the whole right side 6.1 of the outer edge 6 opposing the left side 6.2. Further, the covering tool 50 covers a first short part of a top side 6.4 of the outer edge 6 of the preform 9 and a second short part of the top side 6.4 wherein the first part of the top side 6.4 adjoins the left side 6.2 in a corner and the second part of the top side 6.4 adjoins the right side 6.1 in a corner. The covering tool 50 covers a third short part of a bottom side 6.3 of the outer edge 6 of the preform 9 and a fourth short part of the bottom side 6.3 wherein the third part of the bottom side 6.3 adjoins the left side 6.2 in a corner and the fourth part of the bottom side 6.3 adjoins the right side 6.1 in a corner. The covering tool 50 covers and seals an outer edge opening 6.9 provided separately along the whole sides 6.1 and 6.2, wherein the first and third parts are continuously to the left side 6.2 and the second and fourth parts are continuously to the right side 6.1 of the outer edge 6 of the preform 9. Free ends of the covering tool 50 may overlap the intermediate adhesive layer 4 at the first to fourth parts of the top and bottom sides 6.4 and 6.3.

As shown in Fig. 10, the covering tool 50 comprises a first injection passage 22 or bore fluidly connected to an injection outside opening 22.1 on an outside 50.1 of the covering tool 50 to an injection inside opening 22.2 provided on an inside 50.2 of the covering tool 50. The first injection passage 22 is provided near the free end of the covering tool 50 at the third part of the bottom side 6.3. The covering tool 50 comprises also a second injection passage 22 or bore fluidly connected to an injection outside opening 22.1 on an outside 50.1 of the covering tool 50 to an injection inside opening 22.2 provided on an inside 50.2 of the covering tool 50. The second injection passage 22 is provided near the free end of the covering tool 50 at the fourth part of the bottom side 6.3.

The injection inside openings 22.2 of the first and second injection passages 22 are each fluidly connected via the outer edge opening 6.9 of the outer edge 6 to the remaining space 5.2 between the glass panes 2 and 3 of the preform 9. The covering tool 50 comprises a recess 50.3 on its inside 50.2 for accommodating and sealing the sides 6.1 and 6.2 and the first to fourth parts of the sides 6.3 and 6.4 of the outer edge 6 of the preform 9 wherein corresponding parts of the outer edge opening 6.9 are covered and sealed by the bottom of the recess 50.3 of the covering tool 50.

Further, the covering tool 50 comprises a first venting passage 23 or bore fluidly connecting an venting outside opening 23.1 on the outside 50.1 of the covering tool 50 to an venting inside opening 23.2 provided on the inside 50.2 of the covering tool 50. The venting inside opening 23.2 in the recess 50.3 is fluidly connected via the outer edge opening 6.9 of the outer edge 6 to the remaining or open space 5.2 between the glass panes 2 and 3 of the preform 9. The first venting passage 23 is provided at the first part of the top side 6.4 of the outer edge 6 of the preform 9. The covering tool 50 comprises a second venting passage 23 that is provided at the second part of the top side 6.4 of the outer edge 6.

The method of the invention using the covering tool 50 for providing the window pane 1, particularly the laminated safety glass (VSG), for instance, a side light of a vehicle like a car, comprises again the step of providing the outer glass pane 2 and the inner glass pane 3.

The adhesive PVB(Polyvinylbutyral)-foil used as intermediate adhesive layer 4 is provided by cutting and it is arranged between the outer and inner glass panes 2 and 3. The intermediate adhesive layer 4 occupies a part 5.1 of the space 5 between the glass panes 2 and 3 as shown in Fig. 8. The intermediate adhesive layer has a smaller perimeter and shape than the glass panes 2 and 3.

Next, the inner and outer glass panes 2 and 3 and the intermediate adhesive layer 4 or PVB-foil are laminated together providing the preform 9 of the window pane 1 with remaining space 5.2 between the glass panes 2 and 3. The lamination can be carried out in an autoclave.

In the next step, the covering tool 5O is attached to the preform 9 such that it surrounds and covers the left and right sides 6.1 and 6.2 and the first to fourth parts of the bottom and top sides 6.3 and 6.4 of the outer edge 6 of the preform 9. The sides 6.1, 6.2, and the first to fourth parts of the bottom and top sides 6.3 and 6.4 of the outer edge 6 are then accommodated in the recess 50.3 of the covering tool 50 and they touch a bottom of the recess 50.3.

Liquid reinforcing adhesive material 8, e.g. glue or sticky PVB adhesive, is then injected by the injection nozzles 21 of corresponding injection devices 21.1 via the injection outside openings 22.1, the injection passages 22 of the covering tool 50, the injection inside openings 22.2, and the outer edge opening 6.9 of the outer edge 6 of the preform 9 into the remaining or open space 5.2 of the preform 9. The supply or injection of the liquid reinforcing adhesive material 8 is continued until the whole remaining open space 5.2 between the inner sides 2.1 and 3.1 of the glass panes 2 and 3, the face side 4.1 of the intermediate adhesive layer 4, and the outer edge 6 or perimeter of the preform 9 is filled up completely with the liquid reinforcing adhesive material 8 and the sticky liquid reinforcing adhesive material 8 is continuously flush with the outer edge opening 6.9 on the sides 6.1 and 6.2 and the first to fourth parts of the sides 6.3 and 6.4 of the outer edge 6 of the preform 9.

During injection of the liquid reinforcing adhesive material 8, air in the remaining space 5.2 is vented or pushed out from inside of the remaining or open space 5.2 of the preform 9 via the outer edge opening 6.9 of the preform, the corresponding venting inside openings 23.2, the first and second venting passages 23, and the corresponding venting outside openings 23.1 on the outside 50.1 of the covering tool 50 to the outside environment.

Afterwards, the liquid reinforcing adhesive material 8, for instance, the glue, epoxy, resin, or stiffer PVB or other sticky material, in the remaining space 5.2 is cured to provide the window pane 1 with the additional solid reinforcing adhesive material 8 of higher hardness and stiffness than the intermediate adhesive layer 4 in between the glass panes 2 and 3.

Finally, the covering tool 50 is completely removed and the outer edge 6 of the window pane 1 is grinded and cleaned to remove adhering residues of the covering tool 50 or the reinforcing adhesive material from the surface of the window pane 1 according to Fig. 10.

## Claims

1. Window pane (1) for a motor vehicle, the window pane (1) comprising
at least a first pane (2) and a second pane (3) arranged parallel to the first pane (2), wherein the first and second panes (2, 3) have the same or almost the same perimeter or shape;
an intermediate adhesive layer (4) or foil arranged in a space between the first and second panes (2, 3) for forming a laminate therewith, wherein the intermediate adhesive layer (4) has a smaller shape or smaller perimeter than the first and second panes (2, 3), wherein the intermediate adhesive layer (4) occupies a part of the space between the panes, at least one layer of reinforcing adhesive material (8) injected into the other or remaining part of the space between the first and second panes (2, 3) and adhering to opposing inner sides (2.1, 3.1) of the first and second panes (2, 3), the layer reinforcing adhesive material (8) has a higher strength, hardness and/or stiffness than the intermediate adhesive layer (4) or foil wherein the layer of reinforcing adhesive material (8) is co-planar to the intermediate adhesive layer (4) and the layer of reinforcing adhesive material is flush to at least one side or opposing sides of the outer edge of the window pane.

2. Window pane according to claim 1, **characterized in that** the layer of reinforcing adhesive material (8) is continuously flush to two adjoining sides forming a corner of the outer edge of the window pane (1).

3. Window pane according to claim 1 or claim 2, **characterized in that** the intermediate adhesive layer (4) is an adhesive foil made of PVB(Polyvinylbutyral), an ionomer, a polyurethane (PU) or a EVA and **in that** the reinforcing adhesive material (8) is a glue, a resin, an epoxy, or a PVB that is stiffer than the intermediate adhesive layer (4).

4. Window pane according to one of the claims 1 to 3, **characterized in that** the reinforcing adhesive material (8) has a shore D hardness > 50 and/or a tensile strength < 30 MPa and/or an elongation at breaks < 70%.

5. Method for producing a laminated window pane (1), particularly a laminated safety glass (VSG) for a vehicle, particularly according to one of the claims 1 to 4, the method comprising:
providing a first pane (2) and a second pane (3) having the same or almost the same perimeter or shape for parallel arranging thereof;
providing an intermediate adhesive layer (4) or foil between the first and second panes (2, 3) for forming a laminate therewith, wherein the intermediate adhesive layer (4) has a smaller shape or perimeter than the first and second panes (2, 3), wherein the intermediate adhesive layer (4) occupies only a part of a space between the panes (2, 3);
arranging and laminating the intermediate adhesive layer (4) between the first and second panes (2, 3) in order to provide a preform (9) of the window pane (1), wherein the intermediate adhesive layer (4) occupies only a part of a space between the panes (2, 3) and wherein the remaining or open space provided between the panes (2, 3), the intermediate adhesive layer, and an outer edge of the window pane is open to outside of the window pane at the outer edge of the preform (9) of the window pane (1);
filling up the remaining space between the panes with a liquid reinforcing adhesive material (8) supplied or injected therein from outside of the preform (9), wherein the reinforcing adhesive material (8) is provided co-planar to the intermediate adhesive layer (4), adjoins the intermediate
adhesive layer (4), and extends to the outer edge of the window pane along the remaining space; and
providing the window pane (1) by curing of the liquid reinforcing adhesive material (8) for providing the cured, solid reinforcing adhesive material (8) that has a higher strength, stiffness or hardness than the intermediate adhesive layer (4) and that extends to the outer edge of the window pane.

6. Method according to claim 5, **characterized in that** the liquid reinforcing adhesive material (8) is injected at opposing sides of the outer edge of the preform (9) from outside of the preform and that air within the remaining space between the panes (2, 3) is vented at the outer edge.

7. Method according to claim 5, **characterized in that** the liquid reinforcing adhesive material (8) is injected at one or at each of two opposing sides of the outer edge of the preform (9) from outside of the preform (9) and that air within the remaining space is vented at the other of the opposing sides or at a side of the outer edge between the opposing sides of the outer edge of the preform (9).

8. Method according to claim 5, **characterized in that** the liquid reinforcing adhesive material (8) is injected on one of two sides of the outer edge of the preform (9) from outside of the preform (9) and that air within the remaining space is vented on the other side of the two adjoining sides forming a corner of the outer edge of the preform (9).

9. Method according to one of the preceding claims 5 to 8, **characterized by** using a covering tool (20) arranged on the outer edge of the preform to cover at least a part of the outer edge of the preform and that the liquid reinforcing adhesive material (8) is injected via or through the covering tool into the remaining space of the preform.

10. Method according to claim 9, **characterized by** using at least one covering tool (20) arranged on the outer edge of the preform for covering the outer edge opening of the preform and that the remaining space of the preform is vented via or through the covering tool to outside of the preform during injection of the liquid reinforcing adhesive material.

11. Method according to claim 10, **characterized in that** the covering tool comprises at least one injection passage and at least one venting passage coupled to the remaining space of the preform.

12. Method according to one of the claims 9 to 11, **characterized in that** the covering tool is removed after filling up the remaining space between the panes of the preform with the liquid reinforcing adhesive material.

13. Method according to one of the claims 9 to 12, **characterized in that** the covering tool is removed before or after curing of the liquid reinforcing adhesive material (8) supplied to the remaining space.

14. Method according to one of the claims 9 to 13, **characterized by** using a covering tool or several covering tools framing at least a part of the outer edge or the whole outer edge of the preform.

15. Method according to one of the claims 9 to 14 **characterized in that** the covering tool is a soft tool.
